# DEMANDE DE BREVET EUROPEEN

(11) **EP 1 093 971 A1**
(43) Date de publication de la demande: **25.04.2001**
(21) Numéro de dépôt: 00810922.5
(22) Date de dépôt: 06.10.2000
(51) Int. Cl.: B60R 9/045

(54) **Porte-charge pour un véhicule automobile ainsi que véhicule automobile avec un porte-charge**

(30) Priorité: 19.10.1999 FR 9913170
(71) Demandeur: SCAMBIA INDUSTRIAL DEVELOPMENTS AKTIENGESELLSCHAFT, 9494 Schaan (LI)
(72) Inventeur: Poulet, Serge, 77170 Brie Comte Robert (FR)
(74) Mandataire: Zbinden, Paul A.

(57) **Abrégé**

Le porte-charge (11) comporte au moins une barre (15) déplaçable le long de deux glissières (12) non parallèles. Deux glissoirs (25) sont tenus et guidés par la barre (15) de manière à ce qu'ils puissent suivre les glissières (12) et se déplacer par rapport à la barre (15) perpendiculairement à un plan médian (4) vertical du véhicule. Un élément pivotant (33) est mobile autour d'un axe de pivot (36) par rapport à la barre (15). Deux éléments de transmission (41) sont articulées à un des glissoirs (25) et en prise avec l'élément pivotant (33) de manière à ce qu'un déplacement d'un élément de transmission (41) cause un déplacement inverse de l'autre élément de transmission (41). Le porte-charge (11) permet une auto-adaption de la distance entre les glissoirs (25) à l'écartement des glissières (12) non parallèles.

## Description

La présente invention concerne un porte-charge pour un véhicule automobile, comportant au moins une barre et deux glissoirs attribués à la ou chaque barre, les glissoirs étant destinés à être guidés par deux glissières arrangées non parallèlement l'une à l'autre sur et/ou dans un toit du véhicule automobile et reliés à la barre de manière à ce que la barre puisse être déplacée le long des glissières et qu'une distance d'un glissoir à l'autre puisse être adaptée à l'écartement des deux glissières dans un déplacement de la barre.

Certains véhicules automobiles comportant un pavillon avec un toit et des glissières qui sont arrangées sur le toit et s'étendent substantiellement le long du véhicule. Les glissières sont formées normalement par des rails arrangés dans des rainures du toit ou posés à plat sur le toit. La barre ou, s'il y a plusieurs barres, au moins une des barres ou chaque barre est montée en ses extrémités de façon à pouvoir être déplacée, dans un sens ou l'autre, le long des glissières. Si le porte-charge comporte au moins deux barres, cette disposition permet de régler l'écartement entre les barres.

Pour de nombreux types de véhicules, la largeur du toit, dans sa partie arrière, diffère un peu de la largeur dans sa partie avant. Les glissières arrangées sur le toit d'un véhicule pareil sont alors souvent non parallèles l'une à l'autre et s'approchent par exemple l'une à l'autre vers la partie arrière ou avant du véhicule.

Des porte-charges connus comportent des barres dont chacune est reliée à ses extrémités avec deux glissoirs formés de façon à guider la barre le long des glissières fixées sur ou dans le toit du véhicule. Chaque glissoir est fixé à la barre à l'aide de deux vis. Il faut donc dévisser quatre vis fixant les deux glissoirs à la barre avant de pouvoir déplacer la barre le long du toit. Si la barre a été déplacée et si la distance entre les deux glissoirs a été adaptée à la nouvelle position, il est naturellement nécessaire de revisser les vis. Lors d'un déplacement de la barre, celle-ci a en plus la tendance de changer sa direction. La personne ou les personnes déplaçant la barre doit ou doivent donc ajuster la barre de manière à ce qu'elle reste parallèle à elle-même lors d'un déplacement. Ces porte-charges connus ont donc les désavantages que l'adaptation de la distance entre les deux glissoirs dans un déplacement de le barre et l'ajustement de celle-ci sont assez compliqués et nécessitent relativement beaucoup de manipulations et de temps.

L'objet de l'invention est de créer un porte-charge amélioré dans lequel les désavantages mentionnés des porte-charges connus sont éliminés.

Selon l'invention, cet objet est atteint par un porte-charge comportant les caractéristiques de la revendication 1. Ce porte-charge est donc caractérisé en ce qu'un élément pivotant est pourvu pour la ou chaque barre et est mobile autour d'un axe de pivot par rapport à la barre, que deux éléments de transmission sont associés à la ou chaque barre, que chaque élément de transmission est rigide et articulé à un des glissoirs et que les deux éléments de transmission sont en prise avec l'élément pivotant aux côtés opposés de l'axe de pivot de manière à ce qu'un déplacement d'un élément de transmission cause un déplacement inverse de l'autre élément de transmission.

L'invention concerne également un véhicule d'automobile avec les caractéristiques selon la revendication 11 et donc un véhicule d'automobile avec un toit, avec un porte-charge et avec deux glissières qui sont disposées sur et/ou dans le toit, reliées rigidement avec celui-ci et non parallèles l'une à l'autre.

Des réalisations avantageuses du porte-charge ressortent des revendications dépendantes.

De préférence, les éléments de transmission sont en prise avec l'élément pivotant à des endroits de prise qui ont des distances égales de l'axe de pivot. En plus, ces endroits de prise peuvent être diamétralement opposés l'un à l'autre par rapport à l'axe de pivot.

Dans une forme préférée de réalisation, chaque élément de transmission est articulé à l'élément pivotant par une articulation. Comme alternative, l'élément pivotant peut être pourvu d'une denture et chaque élément de transmission peut comporter une crémaillère engrenant la denture de l'élément pivotant.

Avantageusement, la barre est substantiellement creuse dans des sections transversales et limite un intérieur et les éléments de transmission sont arrangés substantiellement dans l'intérieur de la barre.

Dans une forme préférée de réalisation, la barre et les glissoirs sont configurés de manière à ce que la ou chaque barre puisse être déplacée parallèlement à un plan médian qui croise la barre au milieu de celle-ci. La barre retient et guide les glissoirs dans ce cas avantageusement de manière à ce que les glissoirs puissent glisser perpendiculairement au plan médian par rapport à la barre si celle-ci est déplacée le long des glissières. En plus, la barre peut comporter un secteur central et deux sections finales reliées rigidement aux extrémités du secteur central. Dans ce cas, le secteur central peut être au moins approximativement droit, les section finales peuvent être courbes et/ou former un angle avec le secteur central et possèder une base pourvue d'au moins une fente de guidage étant oblong et perpendiculaire au plan médian et chaque glissoir peut comporter au moins un élément de guidage qui pénètre la fente de guidage et est guidé par celle-ci. Comme alternative, la barre peut comporter un longeron qui est au moins approximativement droit et chaque glissoir peut comporter une pièce d'extrémité qui est courbe et/ou forme un angle avec le longeron, est déplaçable le long du longeron et est équipée d'un élément de connexion articulé à un des éléments de transmission.

De préférence, la ou chaque barre et/ou chaque glissoir est pourvu des moyens de verrouillage formés de manière à ce que la barre puisse être verrouillée aux deux glissières.

Avantageusement, le porte-charge comporte au moins deux barres, qui peuvent être déplacée le long des glissières.

Les deux éléments de transmission sont de préférence en prise avec l'élément pivotant associé à deux endroits de prise qui ont des distances égales de l'axe de pivot et sont arrangés symétriquement par rapport à l'axe de pivot au moins dans une vue parallèle à l'axe de pivot et par exemple dans des vues en toute direction. Les endroits de prise sont alors de préférence diamétralement opposés l'un à l'autre par rapport à l'axe de pivot. L'élément pivotant, les éléments de transmission et les endroits de prise peuvent être adaptés aux tracés des glissières et à la différence entre l'écartement maximum et l'écartement minimum entre les deux glissières de manière à ce que chaque endroit de prise reste en toute position de la barre (concernée) par rapport aux glissières au même côté d'un plan courant par l'axe de pivot et par un axe d'articulation défini par l'articulation joignant l'élément de transmission considéré à un glissoir. Les axes d'articulation définis par les articulations joignant les deux éléments de transmission aux glissoirs sont de préférence symétriques par rapport à l'axe de pivot et disposés avec celle-ci dans un plan commun.

L'élément pivotant et les éléments de transmission associés à la ou chaque barre déplaçable du porte-charge selon l'invention évitent la nécessité de fixer les glissoirs rigidement par des vis ou des autres moyens de fixation amovibles à la barre. Il n'est donc pas nécessaire de délier les glissoirs de la barre pour permettre un déplacement de la ou d'une barre. Si une personne déplace la ou une barre, la distance des deux glissoirs associés à la barre s'adapte automatiquement à l'écartement entre les deux glissières. L'élément pivotant et les éléments de transmission tiennent la barre parallèle à elle-même dans un déplacement de la barre. Si la barre atteint la position voulue, il n'est naturellement pas nécessaire non plus de relier les glissoirs à la barre par des vis ou d'autres moyens de fixation amovibles. Si les glissoirs sont dans des positions fixes par rapport aux glissières, l'élément pivotant et les éléments de transmission assurent que la barre ne se déplace pas dans sa direction longitudinale par rapport aux glissoirs. Si la barre a atteint la position voulue pour porter des bagages ou une autre charge, il suffit donc de fixer la barre et/ou les glissoirs aux glissières comme il est aussi nécessaire pour les porte-charges connus. L'élément pivotant et les éléments de transmission forment donc un mécanisme qui permet une auto-adaptation de la distance entre les glissoirs sans nécessiter de délier et relier et/ou de démonter et remonter des organes de fixation.

L'objet inventé va maintenant être expliqué plus en détail à l'aide d'exemples de réalisation avantageux représentés dans le dessin. Dans le dessin:
la figure 1 représente une vue oblique sur le toit d'un véhicule automobile équipé d'un porte-charge avec deux barres déplaçables le long du toit,
la figure 2 représente une vue oblique sur le même véhicule et le même porte-charge, les deux barres étant cependant dans les positions extrêmes sur la partie arrière du toit,
la figure 3 représente, en vue de côté, deux barres dans la même position comme dans la figure 2,
la figure 4 représente une coupe schématique courant substantiellement le long de la ligne IV - IV dans la figure 7 à travers d'une barre,
la figure 5 représente une coupe similaire à celle dans la figure 4, mais dans une différente position de la barre par rapport à la direction longitudinale du toit,
la figure 6 représente une coupe schématique et similaire à celle dans la figure 4, mais dans encore une autre position de la barre,
les figures 7 et 8 représentent des coupes substantiellement verticales le long des lignes VII - VII et VIII - VIII des figures 4 et 6, respectivement, à travers la barre représentée dans les figures 4 et 6, respectivement,
la figure 9 représente une vue de dessus sur un élément pivotant et les éléments de transmission d'une variante du porte-charge,
la figure 10 représente une coupe à travers d'une variante d'une barre d'un porte-charge le long de la ligne X - X de la figure 11 et
la figure 11 représente une coupe substantiellement verticale à travers de la barre de la figure 10 le long de la ligne XI - XI de la figure 10.

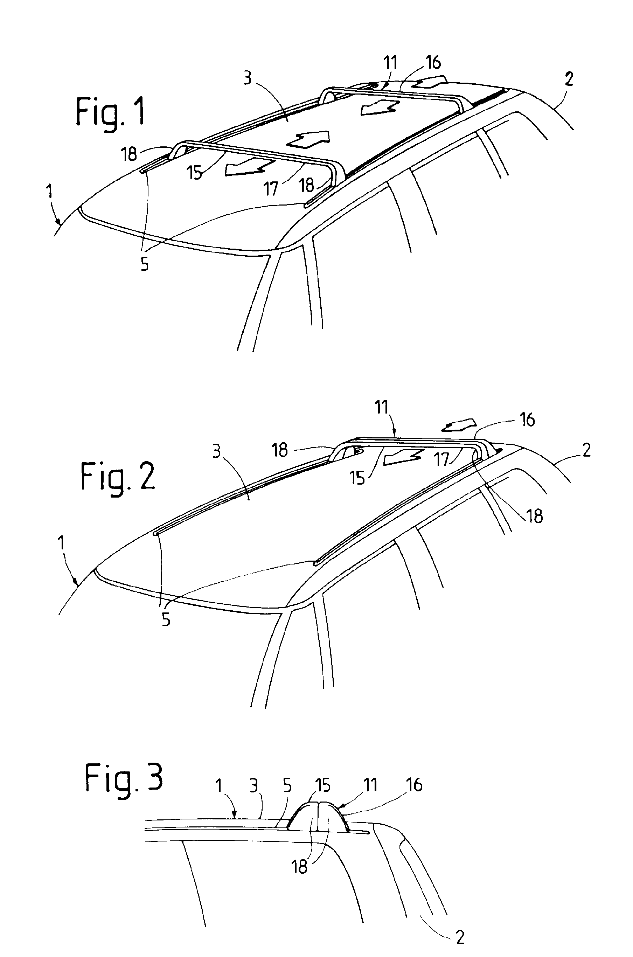

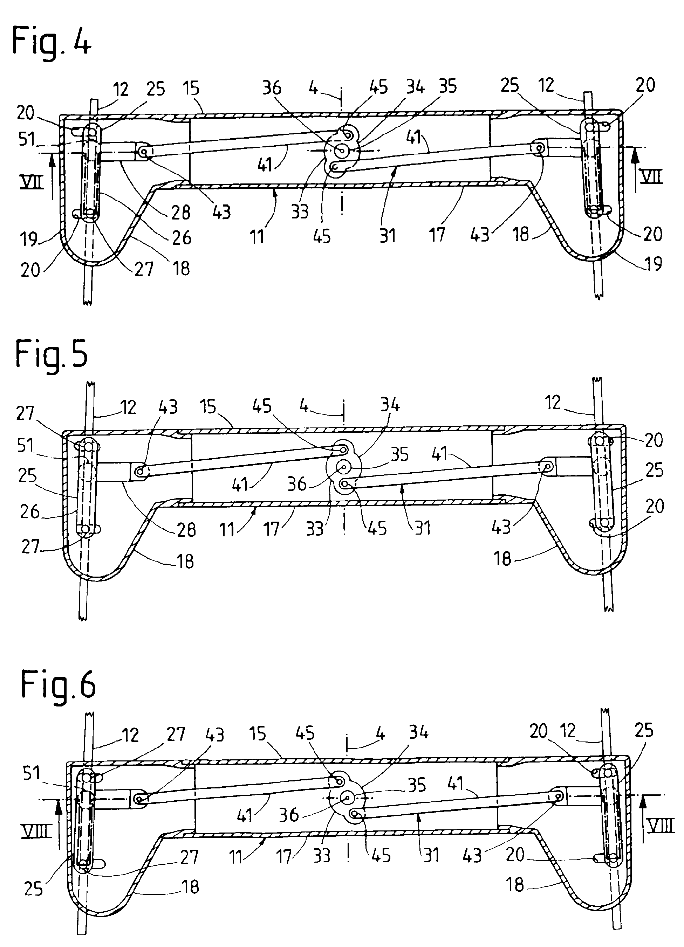

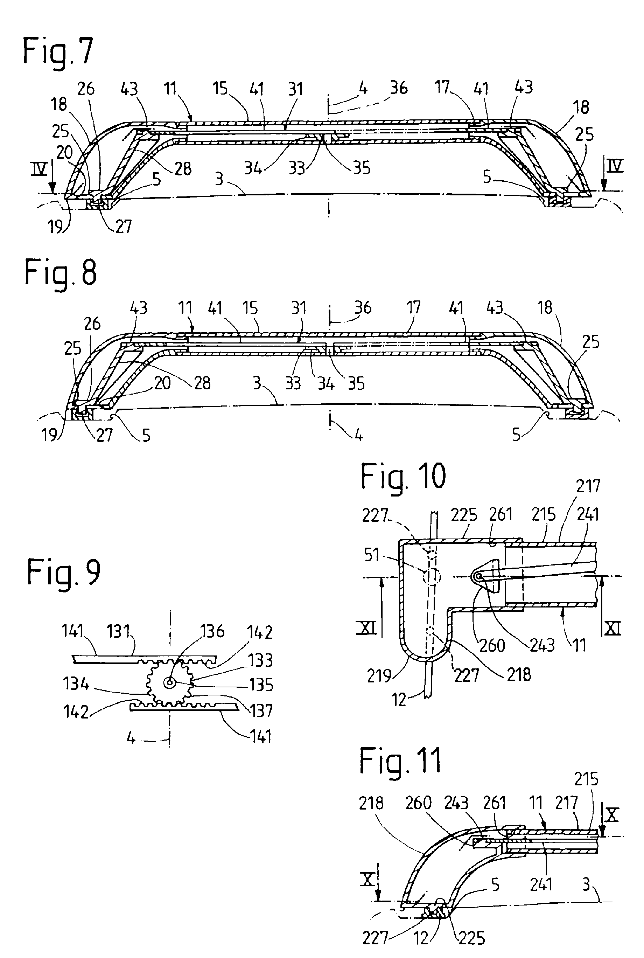

Le véhicule automobile 1 visible dans les figures 1, 2, 3 comporte un pavillon 2 avec un toit 3. Le pavillon 2 définit un plan médian 4 qui est indiqué dans les figures 4 à 8, s'étend le long du véhicule et est vertical si le véhicule est dans une position normale, c'est à dire si le véhicule se trouve sur une surface plate et horizontale. Le toit 3 est aussi représenté en traits mixtes dans les figures 7, 8 et possède deux rainures 5 s'étendant le long des bordures du toit.

Un porte-charge 11 visible dans les figures 1 à 8 comporte deux glissières 12 visibles dans les figures 4 à 8. Chaque glissière 12 est formée par un rail de guidage, disposée dans une des rainures 5 et rigidement reliée au toit 3. Chaque rail de guidage a une forme de U et/ou C en coupe transversale et limite une ouverture longitudinale au côté supérieur. Il est d'ailleurs à remarquer que les rainures 5 pourraient être omises et les rails de guidage pourraient être simplement fixés à plat sur la surface du toit, c'est à dire fixés sur une portion de surface plus ou moins plate.

Les deux glissières 12 sont symétriques l'une à l'autre par rapport au plan médian 4. Les rainures 5 et les glissières sont cependant non parallèles l'une à l'autre et s'approchent l'une à l'autre vers la partie arrière du toit. Les deux glissières 12 sont d'ailleurs par exemple droites en vue de dessus et par exemple droit et/ou au moins légèrement courbe en vue de côté.

Le porte-charge 11 comporte en plus au moins une barre de toit et par exemple deux barres de toit 15, 16, à savoir une barre avant 15 et une barre arrière 16, visibles dans les figures 1 à 3. La barre 15 est également visible dans les figures 4 à 8. Les barres 15, 16 sont guidées par les glissières 12 ou rails par des moyens de guidage qui vont être décrits de façon plus détaillée ci-après. Chaque barre 15, 16 comporte un secteur central 17 et deux sections finales 18 arrangées aux deux extrémités opposées du secteur central 17. Le secteur central 17 de chaque barre consiste par exemple d'un longeron 17 et est au moins approximativement droit et horizontal. Les sections finales 18 sont formées par exemple par des pièces d'extrémité 18 initalement séparées. Les sections finales ou pièces d'extrémité 18 sont courbes et/ou forment un angle avec le longeron et sont aussi dites crosses. Le plan médian 4 croise chaque barre 15, 16 au milieu de celle-ci et forme aussi le plan médian des barres. Chaque barre est substantiellement symétrique par rapport au plan médian. Les deux barres sont en plus substantiellement symétriques l'une à l'autre par rapport à un plan qui s'étend le long des barres entre celles-ci et est au moins approximativement vertical. Chaque barre 15, 16 est substantiellement creuse en section transversales et limite un intérieur. Chaque section finale ou pièce d'extrémité 18 comporte une base 19, des parois solides et par exemple un couvercle à charnière (non représenté). Chaque base 16 est substantiellement plate et disposée en face du toit 3 dans une petite distance du toit. L'intérieur de la barre 15 (ou 16) est clos par les bases 19 aux extrémités de la barre. La base 19 de chaque glissoir 25 comprend cependant au moins une fente de guidage 20 et par exemple deux fentes de guidages 20 espacées l'une de l'autre le long de la glissière 12 associée à la pièce d'extrémité 18. Chaque fente de guidage forme un angle avec la glissière associée et avec le plan médian 4 et est par exemple au moins approximativement perpendiculaire au plan médian 4. Chaque fente 20 est bordée à ses deux extrémités par des surfaces de la base 19.

Le porte-charge est équipé de deux glissoirs 25 pour chaque barre 15, 16. Chaque glissoir 25 possède un pied 26, qui est allongé et s'étend le long de la glissière 12 associée. Le pied 26 de chaque glissoir est pourvu de deux éléments de guidage 27 dont chacun forme une saillie au côté inférieur du pied 26 et traverse une des fentes de guidage 20. Chaque élément de guidage 27 est par exemple cylindrique et peut consister d'une pièce séparée rigidement relié au pied 26. Chaque glissoir 25 est donc reliée par ses éléments de guidage 27 avec la barre 15 (ou 16) et guidé avec petit jeu de manière à ce que le glissoir puisse être déplacé perpendiculairement au plan médian 4 par rapport à la barre 15 (ou 16) associée. Les deux éléments de guidage 20 disposés au pied 16 pénètrent dans l'ouverture longitudinale et dans l'intérieur du rail formant la glissière 12 associée au glissoir. Chaque glissoir 25 est donc guidé de manière à ce qu'il puisse suivre la glissière associée. Chaque barre 15, 16 peut donc être déplacée le long des glissières non parallèles. La barre est alors déplacée parallèlement le long d'une ligne qui est droite ou légèrement courbe et parallèle au plan médian 4. Chaque glissoir 25 comprend un bras 28 qui est incliné du pied par rapport a un plan horizontal en haut vers le plan médian 4. La partie d'extrémité supérieur du bras est pliée horizontalement.

Chaque barre 15, 16 est équipée d'un mécanisme de jonction, retenu et/ou blocage 31. Ce mécanisme 31 comporte un élément pivotant 33. L'élément pivotant 33 comporte un disque inverseur 34, est relié par un tourillon 35 avec la barre 15 (ou 16) et est mobile autour d'un axe de pivot 36 par rapport à la barre 15 (ou 16). L'axe de pivot 36 se trouve au centre de la barre 15 (ou 16), est confondu avec le plan médian 4 et au moins approximativement vertical dans la position normale du véhicule. Le mécanisme 31 comporte également deux éléments de transmission 41. Chacun des éléments 41 est allongé et rigide et consiste essentiellement d'une barre droite. Chaque élément de transmission 41 est relié à proximité d'une extrémité par une articulation 43 au bras 28 de l'un des glissoirs 25 et à proximité de l'autre extrémité par une articulation 45 au disque inverseur 34. Chaque élément de transmission forme donc une bielle et/ou un levier. Les articulations 43 sont arrangées dans les parties d'extrémité supérieures horizontales des bras 28 à peu près au même niveau que les articulations 45. Les éléments de transmission 31 s'étendent donc approximativement horizontalement. Les articulations 43, 45 définissent des axes d'articulation qui sont parallèles à l'axe de pivot 36. Les deux articulations 45 reliant les deux éléments de transmission 41 au commun disque inverseur 34 définissent deux endroits de prise où les éléments de transmission 41 sont en prise avec le l'élément pivotant 33. Ces endroits de prise sont arrangés symétriquement et diamétralement opposés l'un à l'autre par rapport à l'axe de pivot 36. Les parties principales des pieds 26 ainsi que les bras 28 des glissoirs 25, les éléments de transmission 41 et le disque inverseur 34 et donc au moins une partie substantielle de l'élément pivotant 33 se trouvent dans l'intérieur de la barre 15 (ou 16).

Un déplacement d'un élément de transmission 41 cause un mouvement pivotant du disque inverseur 34 de l'élément pivotant 33. Ce mouvement pivotant cause un déplacement de l'autre élément de transmission 41, les déplacements des deux éléments de transmission étant inverses l'un à l'autre. Les deux glissoirs 25 sont couplés entre eux par l'intermédiaire du mécanisme 31. Le mécanisme 31 assure que les deux glissoirs associés à la même barre 15 ou 16 restent toujours symétriques l'un à l'autre par rapport au plan médian 4 dans un déplacement de la barre le long du toit. Le mécanisme assure également que la barre reste parallèle à elle-même.

Chaque barre 15, 16 est équipée des moyens de verrouillage 51 qui sont seulement représentés schématiquement dans les figure 4, 5, 6. Les moyens de verrouillage 51 sont supportés par exemple par les glissoirs 25 et donc reliés par l'intermédiaire des glissoirs à la barre. Il est pourtant aussi possible de pourvoir des moyens de verrouillage supportés directement par les pièces d'extrémité 18 de la barre au lieu ou en plus des moyens de verrouillage mentionnés ci-devant. Les parts supérieures des moyens de verrouillage sont arrangées à l'intérieur des section finales ou pièces d'extrémité 18 et peuvent être maniées lorsque les couvercles à charnières sont ouvertes. Les moyens de verrouillage peuvent par exemple comprendre des vis et des écrous ou des organes permettant un verrouillage rapide. Les moyens de verrouillage permettent de fixer les barres 15 et 16 dans différentes positions, telles que les positions illustrées dans les figures 1 à 8, aux glissières 12.

Au cas de la figure 1, les barres sont espacées l'une de l'autre. Les figures 2 et 3 illustrent la position extrême atteinte par les barres 15, 16 lorsqu'elles sont toutes les deux fixées sur la partie arrière du toit. Les barres 15, 16 peuvent être fixées dans ces positions limites lorsqu'elles ne sont pas utilisées comme porte-charge. Les pièces d'extrémités 18 des barres 15, 16 peuvent alors se contacter au moins approximativement et être accolées l'une contre l'autre dans ces positions. Les figures 4 et 7 représentent la barre 15 dans une position qui est à peu prés égale à celle illustrée par les figures 2 et 3. La barre 15 se trouve alors à proximité des extrémités arrières des glissières 12. La distance entre les deux glissoirs a à peu près la valeur minimale. La figure 5 illustre la situation où la barre 15 se trouve au milieu des glissières. Les figures 6 et 8 représentent la barre 15 dans la position à proximité des extrémités avant des deux glissières 12. Dans cette position d'extrémité, la distance entre les glissoirs a la valeur maximale.

Le mécanisme de jonction, retenue et/ou blocage 131 représenté dans la figure 9 comporte un élément pivotant 133 avec une roue dentée 134. Celle-ci est supportée à l'aide d'un tourillon 135 dans la barre (non représentée). La roue dentée 134 est mobile autour d'un axe de pivot 136 est possède une denture 137.

Le mécanisme 131 comprend également deux éléments de transmission 141. Chacun de ces éléments 141 consiste d'une barre rigide dont une partie d'extrémité est formée par une crémaillère 142. Les dentures des crémaillères des deux éléments 141 sont en engrènement avec la denture 134 à des endroits de prise. Ces endroits de prise sont diamétralement opposés l'un à l'autre par rapport à l'axe de pivot 136. Les endroits de prise se trouvent en plus presqu'au plan médian 4 du véhicule et de la barre de toit. Les autres extrémités (non représentées) des éléments de transmission 141 sont articulées aux glissoirs similairement que les extrémités correspondantes des éléments de transmission 41. Le mécanisme 131 fonctionne similairement que le mécanisme 31.

Le porte-charge partiellement visible dans les figures 10 et 11 comporte au moins une barre 215 avec un longeron 217. Le porte-charge comprend deux glissoirs 225 pour chaque barre. Chaque glissoir possède comme part principale une pièce d'extrémité 218. Les pièces d'extrémité 218 sont partiellement similaires aux pièces d'extrémité 18 décrites précédemment et sont aussi arrangées aux extrémités du longeron, mais ne sont pas fixées rigidement à celui-ci. Chaque pièce d'extrémité 218 est essentiellement creuse et comporte une base 219, des parois solides, un couvercle à charnière et deux éléments de guidage 227 guidés dans une glissière 12. Les pièces d'extrémité 218 formant les glissoirs sont déplaçables en entier le long du longeron et dans une direction perpendiculaire au plan médian, les pièces d'extrémité étant guidées par le longeron 217 pénétrant dans un orifice 261 dans chaque glissoir ou pièce d'extrémité. Chaque glissoir comporte un élément de connexion 260 relié par une articulation 243 à un élément de transmission 241 d'un mécanisme de jonction, retenue et/ou blocage similaire au mécanisme 31 ou 131 décrit précédemment. L'élément de connexion 260 et l'articulation 243 sont arrangés à l'intérieur de la pièce d'extrémité 218, l'élément de connexion 260 étant fixé rigidement à une paroi de la pièce d'extrémité. Chaque pièce d'extrémité est équipée des moyens de verrouillage 51.

Quand la barre 215 est déplacée le long du toit 3 d'un véhicule automobile comportant des glissières 12 non parallèles, les pièces d'extrémité 218 entières sont déplacées tellement par rapport au longeron qu'elles restent symétriques l'une à l'autre par rapport au plan médian défini précédemment et que la barre reste parallèle à elle-même.

Le porte-charge peut être modifié encore autrement. Les barres 15, 16 du porte-charge représenté dans les figures 1 à 8 peuvent par exemple être remplacées par des barres dont chacune a un corps unique qui s'étend continuellement d'une extrémité à l'autre de la barre. Le corps unique peut alors former le secteur central 17 ainsi que la base 19 et les parois solides des section finales 18.

## Revendications

1. Porte-charge pour un véhicule automobile (1), comportant au moins une barre (15, 16, 215) et deux glissoirs (25, 225) attribués à la ou chaque barre (15, 16, 215), les glissoirs (25, 225) étant destinés à être guidés par deux glissières (12) arrangées non parallèlement l'une à l'autre sur et/ou dans un toit (3) du véhicule automobile (1) et reliés à la barre (15, 16, 215) de manière à ce que la barre (15, 16, 215) puisse être déplacée le long des glissières (12) et qu'une distance d'un glissoir (25, 225) à l'autre puisse être adaptée à l'écartement des deux glissières (12) dans un déplacement de la barre (15, 16, 215), caractérisé en ce qu'un élément pivotant (33, 133) est pourvu pour la ou chaque barre (15, 16, 215) et est mobile autour d'un axe de pivot (36, 136) par rapport à la barre (15, 16, 215), que deux éléments de transmission (41, 141, 241) sont associés à la ou chaque barre (15, 16, 215), que chaque élément de transmission (41, 141, 241) est rigide et articulé à un des glissoirs (25, 225) et que les deux éléments de transmission (41, 141, 241) sont en prise avec l'élément pivotant (33, 133) aux côtés opposés de l'axe de pivot (36, 136) de manière à ce qu'un déplacement d'un élément de transmission (41, 141, 241) cause un déplacement inverse de l'autre élément de transmission (41, 141, 241).

2. Porte-charge selon la revendication 1, caractérisé en ce que les éléments de transmission (41, 141, 241) sont en prise avec l'élément pivotant (33, 133) à des endroits de prise qui ont des distances égales de l'axe de pivot (36, 136).

3. Porte-charge selon la revendication 2, caractérisé en ce que les endroits de prise sont diamétralement opposés l'un à l'autre par rapport à l'axe de pivot (36, 136).

4. Porte-charge selon l'une quelconque des revendications 1 à 3, caractérisé en ce que chaque élément de transmission (41) est articulé à l'élément pivotant (33) par une articulation (45).

5. Porte-charge selon l'une quelconque des revendications 1 à 3, caractérisé en ce que l'élément pivotant (133) est pourvu d'une denture (137) et que chaque élément de transmission (141) comporte une crémaillère (142) engrenant la denture (137) de l'élément pivotant (133).

6. Porte-charge selon l'une quelconque des revendications 1 à 5, caractérisé en ce que la barre (15, 16, 225) est substantiellement creuse dans des sections transversales et limite un intérieur et en ce que les éléments de transmission (41, 141, 241) sont arrangés substantiellement dans l'intérieur de la barre (15, 16, 215).

7. Porte-charge selon l'une quelconque des revendications 1 à 6, caractérisé en ce que la barre (15, 16, 215) et les glissoirs (25, 225) sont configurés de manière à ce que la ou chaque barre (15, 16, 215) puisse être déplacée parallèlement à un plan médian (4) qui croise la barre (15, 16, 215) au milieu de celle-ci et que la barre (15, 16, 215) retient et guide les glissoirs (25, 225) de manière à ce que les glissoirs (25, 225) puissent glisser perpendiculairement au plan médian (4) par rapport à la barre (15, 16, 215) si celle-ci est déplacée le long des glissières (12).

8. Porte-charge selon la revendication 7, caractérisé en ce que la barre (15, 16) comporte un secteur central (17) et deux sections finales (18) reliées rigidement aux extrémités du secteur central (17), que le secteur central (17) est au moins approximativement droit, que les section finales (18) sont courbes et/ou forment un angle avec le secteur central (17) et possèdent une base (19) pourvue d'au moins une fente de guidage (20) étant oblong et perpendiculaire au plan médian (4) et que chaque glissoir (25) comporte au moins un élément de guidage (27) qui pénètre la fente de guidage (20) et est guidé par celle-ci.

9. Porte-charge selon la revendication 7, caractérisé en ce que la barre (215) comporte un longeron (217) qui est au moins approximativement droit et que chaque glissoir (225) comporte une pièce d'extrémité (218) qui est courbe et/ou forme un angle avec le longeron (217), est déplaçable le long du longeron (217) et est équipée d'un élément de connexion (260) articulé à un des éléments de transmission (241).

10. Porte-charge selon l'une quelconque des revendications 1 à 9, caractérisé en ce que la ou chaque barre (15, 16, 215) et/ou chaque glissoir (25, 225) est pourvu des moyens de verrouillage (51) formés de manière à ce que la barre (15, 16, 215) puisse être verrouillée aux deux glissières (12).

11. Véhicule d'automobile avec un toit (3) et avec un porte-charge (11) selon l'une quelconque des revendications 1 à 10 et avec deux glissières (12) qui sont disposées sur et/ou dans le toit (3), reliées rigidement avec celui-ci et non parallèles l'une à l'autre.
